# EUROPEAN PATENT SPECIFICATION

(11) **EP 2 652 293 B1**
(45) Date of publication and mention of the grant of the patent: **19.11.2014**
(21) Application number: 11805552.4
(22) Date of filing: 08.12.2011
(51) Int. Cl.: F02D 19/08, F02D 19/06, F02D 19/10, F02D 41/00

(54) **METHOD OF OPERATING AN INTERNAL COMBUSTION PISTON ENGINE IN TRANSIENT LOAD CHANGE, A CONTROL SYSTEM FOR CONTROLLING THE OPERATING OF AN INTERNAL COMBUSTION ENGINE, AND A PISTON ENGINE**
VERFAHREN ZUM BETRIEB EINER KOLBENVERBRENNUNGSMOTORS IN TRANSIENTEM LASTWECHSEL, STEUERSYSTEM ZUR STEUERUNG DES BETRIEBS EINES VERBRENNUNGSMOTORS UND EIN KOLBENMOTOR
PROCÉDÉ DE FONCTIONNEMENT D'UN MOTEUR À PISTON À COMBUSTION INTERNE DANS UN CHANGEMENT DE CHARGE TRANSITOIRE, SYSTÈME DE COMMANDE POUR COMMANDER LE FONCTIONNEMENT D'UN MOTEUR À COMBUSTION INTERNE, ET MOTEUR À PISTON

(30) Priority: 15.12.2010 FI 20106325
(43) Date of publication of application: 23.10.2013
(73) Proprietor: Wärtsilä Finland Oy, 65380 Vaasa (FI)
(72) Inventor: PORTIN, Kaj, FI-65300 Vaasa (FI); ÖSTMAN, Fredrik, FI-65100 Vaasa (FI)
(74) Representative: Ansala, Jyrki Matti
(86) International application number: PCT/FI2011/051089
(87) International publication number: WO 2012/080568

(56) References cited:
- DE-A1- 2 148 506
- DE-A1-102007 039 313
- US-A- 4 463 734

## Description

### Technical field

The present invention relates to a method of operating an internal combustion piston engine according to the preamble of claim 1. The present invention relates also to a control system for controlling the operating of an internal combustion piston engine adapted to combust gaseous fuel, comprising an input unit being arranged to receive one or more signals being indicative of the engine's load, a processing unit arranged to process said one or more signals and an output unit arranged to send one or more control signals to control introduction of a gaseous fuel into the combustion chambers of the engine and introduction of a liquid fuel into the combustion chamber of the engine.

The present invention relates also to a piston engine comprising a control system.

### Background art

Even if large engines in power production generally operate with somewhat moderate load changes there are situation when substantially fast load changes are required. In this context large engines are considered to be such piston engines in which more than 150kW power per cylinder may be generated.

There is a problem relating particularly to engines in marine vessels, in which the ability of increasing the engine load rapidly is an important safety feature. It is typically required that load steps between 0-33%, 33-66% and 66-100% engine load may be provided in order to rapidly provide steering power for the vessel. If such a rapid increase in the power may not be achieved it may cause insufficient manoeuvring capacity and therefore even dangerous situations. Another problem, particularly in installations where the engine is directly connected to the propeller shaft, is the sudden variation of load the engine will experience when operating in rough seas.

With engines installed in power plants producing electric and/or heat power it has also become more and more important to be able to take on load very fast. As an aspect relating to the operation of power plant engines is the increasing number of wind power systems connected to the electric grid, which has also resulted in a more volatile grid frequency. To improve the stability of the grid frequency, the so-called grid codes, which lays down rules, guidelines and/ or standards to be followed by the various operators in the power grid system to plan, develop, maintain and operate the power system in efficient, reliable, economic and secure manner, have been made more stringent, where non-wind power plants are required to support the grid frequency in a larger extent than before.

A large gas engine operates advantageously so that the mixture of air and gaseous fuel in the cylinder has more air than is needed for complete combustion. Lean combustion reduces peak temperatures and, therefore, NOX emissions. Efficiency is increased and higher output is reached while avoiding knocking. Combustion of the lean air-fuel mixture is initiated by injecting a small amount of liquid pilot fuel, like light fuel oil (LFO) into the cylinder. The pilot fuel is ignited in a conventional diesel process, providing a high-energy ignition source for igniting the air - gaseous fuel mixture in the combustion chamber of the engine.

Particularly gas engines are sensitive to deviations in the air-fuel ratio. For large changes in the engine load, the engine hence becomes inclined to cylinder knock and misfire, which potentially may cause hazardous situations.

DE 2 148 506 A discloses a system and a method for controlling the operation of an internal combustion piston engine which uses gaseous fuel and liquid fuel, wherein in the event of one or more signals being indicative of the engines load is increased the ratio of amount of introduced gaseous fuel to amount of introduced liquid fuel is decreased.

DE 10 2007 039 313 A discloses a control system according to the preamble of independent claims 1.

### Disclosure of the Invention

It is an object of the invention to provide a method of operating an internal combustion piston engine in transient load change which provides safe and reliable operation.

It is also an object of the invention to provide a control system for a gaseous fuel operable piston engine, such as dual fuel engine, which improves the capability of the engine to cope with sudden load changes. It is a particular object of the invention to provide a control system for a gaseous fuel operated piston engine, which uses gaseous fuel as its main fuel and liquid fuel as a pilot fuel.

Objects of the invention are substantially met by a method of operating an internal combustion piston engine in transient load change, which uses gaseous fuel as its main fuel and liquid fuel as a pilot fuel, the method comprising the steps of:
- introducing oxygen containing gas into the combustion chamber of the engine,
- introducing gaseous fuel into the combustion chamber of the engine,
- introducing liquid fuel into the combustion chamber of the engine,
- combusting the gaseous and the liquid fuel in the combustion chamber by making use of oxygen,
- generating one or more signals being indicative of the engine's load
- determining a ratio of the amount of the gaseous fuel and the amount or the liquid fuel to be introduced into the combustion chamber based on said one or more signals indicative of the engines load,
- in the event of one or more signals indicative of the engine's load is increased, the ratio of amount of introduced gaseous fuel to amount of introduced liquid fuel is changed,
   wherein it is characteristic to the invention that
- the ratio of the amount of the gaseous fuel and the amount or the liquid fuel to be introduced into the combustion chamber is determined so that time derivative of the one or more signals being indicative of the engine's load is defined,
- a change margin value for the time derivative is defined or made available for the determining the ratio of the amount of the gaseous fuel and the amount or the liquid fuel, and
- in an event of the actual time derivative being greater than the change margin value for the time derivative the a ratio of the amount of the gaseous fuel and the amount or the liquid fuel is decreased.

This way it is possible to cope with sudden load changes by controlling the ratio between the amount of injected gaseous fuel and pilot fuel without compromising the operation stability of the operation of the engine. With the present invention it is possible to decrease a risk of misfire and/or cylinder knocking of a gaseous fuel operated duel fuel engine.

According to an embodiment of the invention According to one embodiment of the invention, in the event of one or more signals indicative of the engine's load is increased the amount of oxygen introduced into the combustion chamber is also increased. The amount of oxygen introduced into the combustion chamber is increased by increasing the amount of air charged into the combustion chamber. This may be accomplished by controlling the operation of the waste gate when the engine is provided with a turbo charger. The amount of oxygen introduced into the combustion chamber can alternatively or additionally be increased by providing air from a pressurized air chamber connectable to the engine, if available.

According to an another embodiment of the invention the dual fuel engine may be considered to operate in combined diesel and otto cycles, in which the liquid (pilot) fuel combustion applies diesel cycle and gaseous fuel combustion otto cycle ignited with the liquid fuel's compression ignition changing the ratio by increasing the amount of liquid fuel is less prone to disturbances.

According to an another embodiment of the invention the method of operating an internal combustion piston engine comprises introducing oxygen containing gas into the combustion chambers of the engine making use of a super charger, and the amount of oxygen introduced into the combustion chamber is increased by controlling the supercharger to increase the power of its compressor part. The super charger may be mechanically driven in which case the increase of its power may be obtained by an electric motor selectively coupled thereto.

Introducing oxygen containing gas into the combustion chambers of the engine can be practised making use of a turbo charger, in which the energy of the exhaust gases is used in a turbine part of the turbocharger to drive its compressor part. This is advantageous, because the amount of oxygen introduced into the combustion chamber can be increased by controlling the state of the turbine part's waste gate of the turbo charger.

According to another embodiment of the invention the amount of oxygen introduced into the combustion chamber is increased by increasing the open time of the intake valve(s) of the engine. This may be practised instead or in addition increase the power of the compressor part of the supercharger.

When the desired load has been achieved the ratio between the gaseous fuel and pilot fuel is adjusted back the previous or nominal ratio.

Objects of the invention are also substantially met by a control system for controlling the operating of an internal combustion piston engine adapted to combust gaseous fuel, comprising:
- input unit being arranged to receive one or more signals being indicative of the engine's load
- processing unit arranged to process said one or more signals
- output unit arranged to send one or more control signals to control introduction of a gaseous fuel into the combustion chambers of the engine and introduction of a liquid fuel into the combustion chamber of the engine;
- the control system comprising a logical unit arranged to define the control signals to control introduction of the gaseous fuel and the liquid fuel based on the said one or more signals indicative of the engines load received by the input unit when in operation,
- the logical unit is arranged to define the control signals to control introduction of the gaseous fuel and the liquid fuel so that in the event of one or more signals being indicative of the engine's load is increased the ratio of amount of gaseous fuel to amount of liquid fuel is decreased, wherein the logical unit is arranged to:
- define a time derivative of the one or more signals being indicative of the engine's load
- define or made available a change margin value for the time derivative
- in an event of the actual time derivative being greater than the change margin value for the time derivative, send a command signal to decrease the a ratio of the amount of the gaseous fuel and the amount or the liquid fuel to be introduced into the combustion chamber.

It is further advantageous that the logical unit is arranged to, in an event of the actual time derivative being greater than the change margin, send a command signal to increase the oxygen introduced in to the combustion chamber.

Advantageously the control system comprises a storage unit or it is arranged in communication with a storage unit in which the ratio value is given as function of the engine speed and load.

Objects of the invention are also substantially met by a piston engine operating with gaseous fuel, wherein the engine comprises a control system described above.

### Brief Description of Drawings

In the following, the invention will be described with reference to the accompanying exemplary, schematic drawings, in which;
Figure 1 illustrates an embodiment of the invention, and
Figure 2 illustrates a method of operating a of internal combustion piston engine in flow diagram according to an embodiment of the invention.

### Detailed Description of Drawings

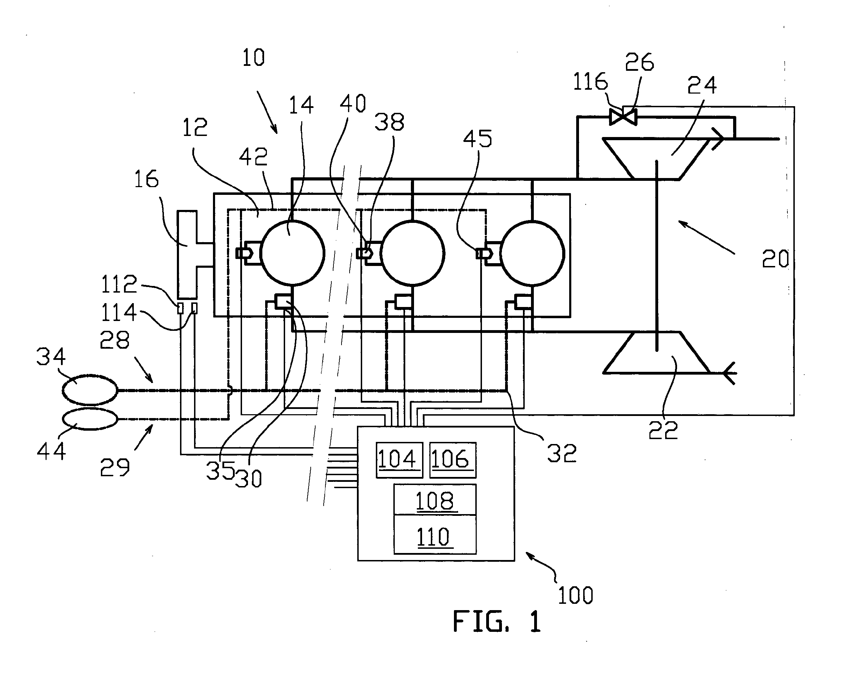

Figure 1 show schematically a so called dual fuel engine 10. Engine 10 is provided with a body or block 12 and its cylinders 14 therein. During the operation of the engine mechanical power is supplied via its crank shaft 16 which is typically provided with a fly wheel. The engine is provided with a supercharger 20. The supercharger 20 depending on its type comprises at least a compressor part 22 by means of which oxygen containing gas may be introduced into the combustion chamber of the engine in the cylinders thereof. Typically the oxygen containing gas is ambient air, but the gas may also contain recycled exhaust gas. Advantageously the supercharger is a turbocharger in which the compressor part 22 is driven by a turbine part 24 making use of the energy obtained from the exhaust gas of the engine. The turbo charger turbine part 24 is according to an embodiment of the invention provided with a waste gate 26 which allows the exhaust gas to bypass the turbine part and thus control the work performed be the compressor part 22.

Engine is a so called dual fuel engine, the main fuel of which is gaseous fuel. Accordingly, the engine 10 is provided with a gaseous fuel feeding system 28 arranged to introduce gaseous fuel into each combustion chamber of the engine according to its working cycle. The gaseous fuel feeding system comprises gaseous fuel admission valves 30 in connection with an intake channel upstream the intake valves (not shown) of each cylinder head. Each gaseous fuel admission valve is connected to a gaseous fuel supply line 32 feeding the fuel from a source of gaseous fuel 34.

Additionally the engine 10 is provided with a liquid fuel feeding system 29 arranged to introduce liquid fuel into each combustion chamber or a pre-chamber 40 thereof of the engine according to its working cycle in order to ignite the gaseous fuel in the combustion chamber of the engine. In the embodiment of figure 1 the liquid fuel feeding system comprises fuel injection valves 38 in connection with a pre-chamber 40. Each fuel injection valve 38 is connected to a fuel supply line 42 feeding the fuel from a source of liquid fuel 44. It is obvious, that the fuel supply line 42 may comprise a so called common rail system (not disclosed). Typically the liquid fuel is for example light fuel oil.

Engine is also provided with a control system 100. Control system comprises an input unit 104 being arranged to receive one or more signals from one or more measurement device, the signal being indicative of the engine's load. Additionally the control system comprises an output unit 106 arranged to send one or more control signals to control the operation of the engine. The control system further comprises a processing unit 110 arranged to process said one or more signals received or to be send by the control system. According to the embodiment of figure 1 the output unit 106 is arranged to send one or more control signals to control the introduction of a gaseous fuel into the combustion chambers of the engine and introduction of a liquid fuel into the combustion chamber of the engine.

The control system is further provided with a logical unit 108 arranged to define the control signals to control introduction of the gaseous fuel and the liquid fuel based on the said one or more signals indicative of the engines load received by the input unit when in operation.

The control system also includes gaseous fuel feeding actuators 35 and liquid fuel feeding actuator 45 for actuating the opening and closing of the gaseous fuel admission valves 30 and fuel injection valves 38 under control of the control system. Additionally the control system includes a source of signal of engine speed 112 and source of signal of engine load 114.

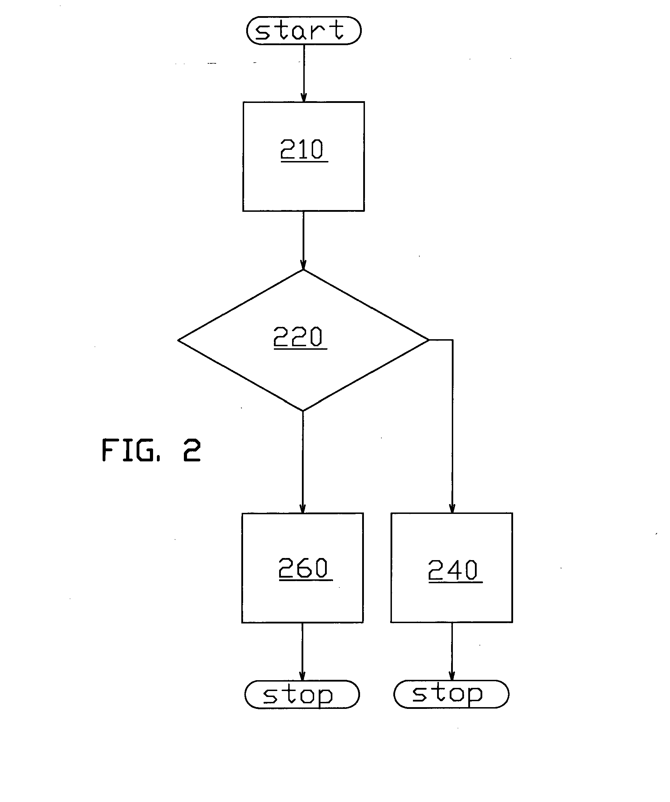

Referring to both the figure 1 and figure 2 the method of operating an internal combustion piston engine with dual fuel operation is practised so that a signal indicative of the engine load, step 210 is detected or determined. The signal indicative of engine load may be determined based on one or several measurements of the engines operational parameters. As is shown in figure 1 one such measurement is engine speed 112. It as apparent to those skilled in the art that a signal indicative to engine load may be provided in many ways using direct or indirect measurements and other information.

The signal indicative of the engine load is compared to the previous determined signal indicative of engine load. In case the increase in the engine load is greater than a predetermined change margin value, step 220, i.e. when such an increase has been detected, the fuel ratio, i.e. the amount of injected gaseous fuel / amount of injected pilot fuel is decreased, step 240. Otherwise the fuel ratio is unchanged, step 260.

The predetermined change margin value can be a range or a window particularly determined for transient load changes. In this context transient load change means particularly a load step requiring an load increase which by controlling only the main fuel injection and oxygen according to prior art, results in a fault situation, such as misfire. The predetermined change margin value can be, for example, a certain numerical value for load increase in kW/s.

The ratio is decreased so that more liquid fuel (e.g. LFO) is injected. This is advantageous, because this increase the capability of the engine to take on more load. As diesel cycle, which the liquid fuel combustion applies, is less sensitive to an excess of air, the engine may be controlled to operate with increased amount of oxygen. The waste gate valve 26 can additionally be controlled by a waste gate control device 116 in such way that an increase in the air flow is achieved during this stage, which then increases the ramp rate of the turbocharger speed.

The ratio given as function of the current engine speed and load may be stored in the control system 100 or made available to the control system.

When the desired load has been achieved the ratio between the gaseous fuel and pilot fuel is adjusted back the previous or nominal ratio.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. Method of operating an internal combustion piston engine in transient load change, which uses gaseous fuel as its main fuel and liquid fuel as a pilot fuel, the method comprising the steps of:
- introducing oxygen containing gaseous fuel into the combustion chamber of the engine,
- introducing gaseous fuel into the combustion chamber of the engine,
- introducing liquid fuel into the combustion chamber of the engine,
- combusting the first and the liquid fuel in the combustion chamber by making use of oxygen,
- generating one or more signals being indicative of the engine's load,
- determining a ratio of the amount of the gaseous fuel and the amount or the liquid fuel to be introduced into the combustion chamber based on said one or more signals indicative of the engines load,
- In the event of one or more signals indicative of the engine's load is increased the ratio of amount of introduced gaseous fuel to amount of introduced liquid fuel is changed, **characterized in that**
- the ratio of the amount of the gaseous fuel and the amount of the liquid fuel to be introduced into the combustion chamber is determined so that time derivative of the one or more signals being indicative of the engine's load is defined,
- a change margin value for the time derivative is defined or made available for determining the ratio of the amount of the gaseous fuel and the amount or the liquid fuel, and
- in an event of the actual time derivative being greater than the change margin value for the time derivative the a ratio of the amount of the gaseous fuel and the amount or the liquid fuel to be introduced into the combustion chamber is decreased.

2. Method of operating an internal combustion piston engine according to claim 1, **wherein**
- In the event of one or more signals being indicative of the engine's load is increased the amount of oxygen introduced into the combustion chamber is increased.

3. Method of operating an internal combustion piston engine according to claim 1, **wherein**
- the ratio of amount of introduced gaseous fuel to amount of introduced liquid fuel is changed by increasing the amount of the introduction of the liquid fuel.

4. Method of operating an internal combustion piston engine according anyone of the preceding claims 1-3, **wherein**
- the gaseous fuel is gaseous fuel and it is introduced into the combustion chamber with the oxygen containing gas, and
- the liquid fuel is liquid fuel and it is introduced directly into the combustion chamber or a pre-chamber thereof.

5. Method of operating an internal combustion piston engine according to claim 2, **wherein**
- introducing oxygen containing gas into the combustion chambers of the engine is practised making use of a super charger,
- the amount of oxygen introduced into the combustion chamber is increased by controlling the super charger to increase the power of its compressor part.

6. Method of operating an internal combustion piston engine according to claim 5, **wherein**
- introducing oxygen containing gas into the combustion chambers of the engine is practised making use of a turbo charger, and
- the amount of oxygen introduced into the combustion chamber is increased by controlling the closing the waste gate of the turbo charger.

7. Method of operating an internal combustion piston engine according to claim 2 or 5, **wherein**
- the amount of oxygen introduced into the combustion chamber is increased by increasing the open time of the intake valve(s) of the engine.

8. Method of operating an internal combustion piston engine according to claim 1, **wherein**
- when the desired load has been achieved the ratio between the gaseous fuel and pilot fuel is adjusted back the previous or nominal ratio.

9. Control system for controlling the operating of an internal combustion piston engine adapted to combust gaseous fuel, comprising:
- an input unit (104) being arranged to receive one or more signals being indicative of the engine's load,
- a processing unit (110) arranged to process said one or more signals,
- an output unit (106) arranged to send one or more control signals to control introduction of a gaseous fuel into the combustion chambers of the engine and introduction of a liquid fuel into the combustion chamber of the engine,
- the control system comprising a logical unit (108) arranged to define the control signals to control introduction of the gaseous fuel and the liquid fuel based on the said one or more signals indicative of the engines load received by the input unit when in operation, **characterized in that**
- the logical unit (108) is arranged to define the control signals to control introduction of the gaseous fuel and the liquid fuel so that in the event of one or more signals being indicative of the engine's load is increased the ratio of amount of introduced gaseous fuel to amount of introduced liquid fuel is decreased when in operation,
**wherein** the logical unit (108) is arranged to:
- define a time derivative of the one or more signals being indicative of the engine's load,
- define or make available a change margin value for the time derivative,
- in an event of the actual time derivative being greater than the change margin value for the time derivative, send a command signal to decrease the ratio of the amount of the gaseous fuel and the amount or the liquid fuel to be introduced into the combustion chamber.

10. Control system according to claim 9, **wherein** the logical unit is arranged to:
- in an event of the actual time derivative being greater than the change margin send a command signal to increase the oxygen introduced in to the combustion chamber.

11. Control system according to claim 9, **wherein**
- the control system comprises a storage unit or is arranged in communication with a storage unit in which the ratio value is given as function of the engine speed and load.

12. A piston engine operating with gaseous fuel, **wherein** the engine comprises a control system according to anyone of the claims 9 - 11.

## Patentansprüche

1. Verfahren zum Betreiben eines Kolbenverbrennungsmotors, der einen gasförmigen Kraftstoff als Hauptkraftstoff verwendet und flüssigen Kraftstoff als Pilotkraftstoff verwendet, bei einer vorübergehenden Belastungsveränderung, wobei das Verfahren die folgenden Schritte umfasst:
- Einbringen von sauerstoffhaltigem gasförmigem Kraftstoff in die Verbrennungskammer des Motors,
- Einbringen von gasförmigem Kraftstoff in die Verbrennungskammer des Motors,
- Einbringen von flüssigem Kraftstoff in die Verbrennungskammer des Motors,
- Verbrennen des ersten und des flüssigen Kraftstoffs in der Verbrennungskammer unter Verwendung von Sauerstoff,
- Erzeugen eines oder mehrerer Signale, die die Belastung des Motors angeben,
- Bestimmen eines Verhältnisses der Menge des gasförmigen Kraftstoffs und der Menge des flüssigen Kraftstoffs, die in die Verbrennungskammer eingebracht werden sollen, auf Basis des einen oder der mehreren Signale, die die Belastung des Motors angeben,
- wobei das Verhältnis der Menge des eingebrachten gasförmigen Kraftstoffs zu der Menge des eingebrachten flüssigen Kraftstoffs verändert wird, wenn ein oder mehr Signale, die die Belastung des Motors angeben, erhöht sind, **dadurch gekennzeichnet, dass**
- das Verhältnis der Menge des gasförmigen Kraftstoffs und der Menge des flüssigen Kraftstoffs, die in die Verbrennungskammer eingebracht werden sollen, so bestimmt wird, dass eine Zeitableitung des einen oder der mehreren Signale, die die Belastung des Motors angeben, definiert wird,
- zur Bestimmung des Verhältnisses der Menge des gasförmigen Kraftstoffs und der Menge des flüssigen Kraftstoffs ein Wert eines Veränderungsspielraums für die Zeitableitung definiert oder verfügbar gemacht wird, und
- ein Verhältnis der Menge des gasförmigen Kraftstoffs und der Menge des flüssigen Kraftstoffs, die in die Verbrennungskammer eingebracht werden sollen, verringert wird, wenn die tatsächliche Zeitableitung größer als der Wert des Veränderungsspielraums für die Zeitableitung ist.

2. Verfahren zum Betreiben eines Kolbenverbrennungsmotors nach Anspruch 1, **wobei**
- die Menge des Sauerstoffs, der in die Verbrennungskammer eingebracht wird, erhöht wird, wenn ein oder mehr Signale, die die Belastung des Motors angeben, erhöht sind.

3. Verfahren zum Betreiben eines Kolbenverbrennungsmotors nach Anspruch 1, **wobei**
- das Verhältnis der Menge des eingebrachten gasförmigen Kraftstoffs zu der Menge des eingebrachten flüssigen Kraftstoffs durch Erhöhen der Einbringungsmenge des flüssigen Kraftstoffs verändert wird.

4. Verfahren zum Betreiben eines Kolbenverbrennungsmotors nach einem der vorhergehenden Ansprüche 1 bis 3, **wobei**
- der gasförmige Kraftstoff ein gasförmiger Kraftstoff ist und mit dem sauerstoffhaltigen Gas in die Verbrennungskammer eingebracht wird, und
- der flüssige Kraftstoff ein flüssiger Kraftstoff ist und direkt in die Verbrennungskammer oder in eine Vorkammer derselben eingebracht wird.

5. Verfahren zum Betreiben eines Kolbenverbrennungsmotors nach Anspruch 2, **wobei**
- das Einbringen des sauerstoffhaltigen Gases in die Verbrennungskammern des Motors unter Verwendung eines Aufladers vorgenommen wird,
- die Menge des Sauerstoffs, der in die Verbrennungskammer eingebracht wird, erhöht wird, indem der Auflader so gesteuert wird, dass die Leistung seines Kompressorteils erhöht wird.

6. Verfahren zum Betreiben eines Kolbenverbrennungsmotors nach Anspruch 5, **wobei**
- das Einbringen des sauerstoffhaltigen Gases in die Verbrennungskammern des Motors unter Verwendung eines Turboladers vorgenommen wird,
- die Menge des Sauerstoffs, der in die Verbrennungskammer eingebracht wird, erhöht wird, indem das Schließen des Wastegates des Turboladers gesteuert wird.

7. Verfahren zum Betreiben eines Kolbenverbrennungsmotors nach einem der Ansprüche 2 bis 5, **wobei**
- die Menge des Sauerstoffs, der in die Verbrennungskammer eingebracht wird, erhöht wird, indem die Öffnungszeit des/der Ansaugventil(e) des Motors erhöht wird.

8. Verfahren zum Betreiben eines Kolbenverbrennungsmotors nach Anspruch 1, **wobei**
- das Verhältnis zwischen dem gasförmigen Kraftstoff und dem Pilotkraftstoff zu dem vorherigen oder Nennverhältnis zurück verstellt wird, wenn die gewünschte Belastung erreicht wurde.

9. Steuersystem zur Steuerung des Betriebs eines Kolbenverbrennungsmotors, der zur Verbrennung von gasförmigem Kraftstoff geeignet ist, umfassend:
- eine Eingangseinheit (104), die dazu eingerichtet ist, ein oder mehr Signale, die die Belastung des Motors angeben, zu erhalten,
- eine Verarbeitungseinheit (110), die dazu eingerichtet ist, das eine oder die mehreren Signale zu verarbeiten,
- eine Ausgangseinheit (106), die dazu eingerichtet ist, ein oder mehr Steuersignale zur Steuerung der Einbringung eines gasförmigen Kraftstoffs in die Verbrennungskammern des Motors und zur Einbringung eines flüssigen Kraftstoffs in die Verbrennungskammer des Motors zu senden,
- wobei das Steuersystem eine Logikeinheit (108) umfasst, die dazu eingerichtet ist, die Steuersignale zur Steuerung der Einbringung des gasförmigen Kraftstoffs und des flüssigen Kraftstoffs auf Basis des einen oder der mehreren Signale, die die Belastung des Motors angeben und beim Betrieb durch die Eingangseinheit erhalten werden, zu definieren, **dadurch gekennzeichnet, dass**
- die Logikeinheit (108) dazu eingerichtet ist, die Steuersignale zur Steuerung der Einbringung des gasförmigen Kraftstoffs und des flüssigen Kraftstoffs so zu definieren, dass beim Betrieb das Verhältnis der Menge des eingebrachten gasförmigen Kraftstoffs zu der Menge des eingebrachten flüssigen Kraftstoffs verringert wird, wenn ein oder mehr Signale, die die Belastung des Motors angeben, erhöht sind,
**wobei** die Logikeinheit (108) dazu eingerichtet ist,
- eine Zeitableitung des einen oder der mehreren Signale, die die Belastung des Motors angeben, zu definieren,
- einen Wert eines Veränderungsspielraums für die Zeitableitung zu definieren oder verfügbar zu machen,
- ein Befehlssignal zur Verringerung des Verhältnisses der Menge des gasförmigen Kraftstoffs und der Menge des flüssigen Kraftstoffs, die in die Verbrennungskammer eingebracht werden sollen, zu senden, wenn die tatsächliche Zeitableitung größer als der Wert des Veränderungsspielraums für die Zeitableitung ist.

10. Steuersystem nach Anspruch 9, **wobei** die logische Einheit dazu eingerichtet ist,
- ein Befehlssignal zur Vermehrung des in die Verbrennungskammer eingebrachten Sauerstoffs zu senden, wenn die tatsächliche Zeitableitung größer als der Veränderungsspielraum ist.

11. Steuersystem nach Anspruch 9, **wobei**
- das Steuersystem eine Speichereinheit umfasst oder in Verbindung mit einer Speichereinheit eingerichtet ist, worin der Verhältniswert als Funktion der Motorgeschwindigkeit und der Belastung gegeben ist.

12. Kolbenmotor, der mit einem gasförmigen Kraftstoff arbeitet, **wobei** der Motor ein Steuersystem nach einem der Ansprüche 9 bis 11 umfasst.

## Revendications

1. Procédé de fonctionnement d'un moteur à pistons à combustion interne en changement de charge transitoire, qui utilise du carburant gazeux en tant que carburant principal et du carburant liquide en tant que carburant pilote, le procédé comprenant les étapes :
- d'introduction de carburant gazeux contenant de l'oxygène dans la chambre à combustion du moteur,
- d'introduction de carburant gazeux dans la chambre à combustion du moteur,
- d'introduction de carburant liquide dans la chambre à combustion du moteur,
- de combustion du premier carburant et du carburant liquide dans la chambre à combustion en utilisant l'oxygène,
- de génération d'un signal ou de signaux indiquant la charge du moteur,
- de détermination d'un rapport de la quantité de carburant gazeux et la quantité de carburant liquide à introduire dans la chambre à combustion en se basant sur le signal ou les signaux indiquant la charge du moteur,
- dans le cas où un signal ou des signaux indiquant la charge du moteur est/sont augmenté(s), le rapport de la quantité de carburant gazeux introduite à la quantité de carburant liquide introduite est modifié,
**caractérisé en ce que**
- le rapport de la quantité de carburant gazeux et la quantité de carburant liquide à introduire dans la chambre à combustion est déterminé de façon à ce que la durée dérivée du signal ou des signaux indiquant la charge du moteur soit définie,
- une valeur de marge de changement pour la durée dérivée est définie ou fournie pour déterminer le rapport de la quantité de carburant gazeux et la quantité de carburant liquide, et
- si la durée réelle dérivée est supérieure à la valeur de marge de changement pour la durée dérivée, le rapport de la quantité de carburant gazeux et la quantité de carburant liquide à introduire dans la chambre à combustion est réduit.

2. Procédé de fonctionnement d'un moteur à pistons à combustion interne selon la revendication 1, dans lequel
- si un ou des signaux indiquant la charge du moteur est/sont augmenté(s), la quantité d'oxygène introduite dans la chambre à combustion est augmentée.

3. Procédé de fonctionnement d'un moteur à pistons à combustion interne selon la revendication 1, dans lequel
- le rapport de la quantité de carburant gazeux introduite à la quantité de carburant liquide introduite est modifié en augmentant la quantité du carburant liquide introduit.

4. Procédé de fonctionnement d'un moteur à pistons à combustion interne selon l'une quelconque des revendications précédentes 1-3, dans lequel
- le carburant gazeux est du carburant gazeux et il est introduit dans la chambre à combustion avec le gaz contenant l'oxygène, et
- le carburant liquide est du carburant liquide et il est introduit directement dans la chambre à combustion ou une pré-chambre de celle-ci.

5. Procédé de fonctionnement d'un moteur à pistons à combustion interne selon la revendication 2, dans lequel
- l'introduction du gaz contenant l'oxygène dans les chambres à combustion du moteur est effectuée en utilisant un compresseur d'alimentation,
- la quantité d'oxygène introduite dans la chambre à combustion est augmentée en commandant le compresseur d'alimentation pour augmenter la puissance de sa partie de compresseur.

6. Procédé de fonctionnement d'un moteur à pistons à combustion interne selon la revendication 5, dans lequel
- l'introduction du gaz contenant l'oxygène dans les chambres à combustion du moteur est effectuée en utilisant un compresseur d'alimentation, et
- la quantité d'oxygène introduite dans la chambre à combustion est augmentée en commandant la fermeture de la soupape de décharge du compresseur d'alimentation.

7. Procédé de fonctionnement d'un moteur à pistons à combustion interne selon la revendication 2 ou 5, dans lequel
- la quantité d'oxygène introduite dans la chambre à combustion est augmentée en augmentant le temps d'ouverture de la/des soupape(s) d'admission du moteur.

8. Procédé de fonctionnement d'un moteur à pistons à combustion interne selon la revendication 1, dans lequel
- lorsque la charge souhaitée a été obtenue, le rapport entre le carburant gazeux et le carburant pilote est ajusté en revenant au rapport précédent ou nominal.

9. Système de commande pour commander le fonctionnement d'un moteur à pistons à combustion interne adapté pour la combustion de carburant gazeux, comprenant :
- une unité d'entrée (104) agencée pour recevoir un signal ou des signaux indiquant la charge du moteur,
- une unité de traitement (110) agencée pour traiter le signal ou les signaux,
- une unité de sortie (106) agencée pour envoyer un ou des signaux de commande pour commander l'introduction d'un carburant gazeux dans les chambres à combustion du moteur et l'introduction d'un carburant liquide dans la chambre à combustion du moteur,
- le système de commande comprenant une unité logique (108) agencée pour définir les signaux de commande pour commander l'introduction du carburant gazeux et du carburant liquide en se basant sur le signal ou les signaux indiquant la charge du moteur reçus par l'unité d'entrée en fonctionnement, **caractérisé en ce que**
- l'unité logique (108) est agencée pour définir les signaux de commande pour commander l'introduction du carburant gazeux et du carburant liquide de façon à ce que si le signal ou les signaux indiquant la charge du moteur est/sont augmenté(s), le rapport de la quantité de carburant gazeux introduite à la quantité de carburant liquide introduite est réduit en fonctionnement,
sachant que l'unité logique (108) est agencée pour :
- définir une durée dérivée du signal ou des signaux indiquant la charge du moteur,
- définir ou fournir une valeur de marge de changement pour la durée dérivée,
- si la durée réelle dérivée est supérieure à la valeur de marge de changement pour la durée dérivée, envoyer un signal de commande de réduire le rapport de la quantité de carburant gazeux et la quantité de carburant liquide à introduire dans la chambre à combustion.

10. Système de commande selon la revendication 9, dans lequel l'unité logique est agencée pour :
- si la durée réelle dérivée est supérieure à la marge de changement, envoyer un signal de commande pour augmenter l'oxygène introduit dans la chambre à combustion.

11. Système de commande selon la revendication 9, dans lequel
- le système de commande comprend une unité de stockage ou est agencé en communication avec une unité de stockage dans laquelle la valeur du rapport est donnée en fonction de la vitesse et de la charge du moteur.

12. Moteur à piston fonctionnant avec du carburant gazeux, dans lequel le moteur comprend un système de commande selon l'une quelconque des revendications 9 à 11.
